# EUROPEAN PATENT SPECIFICATION

(11) **EP 2 756 697 B1**
(45) Date of publication and mention of the grant of the patent: **17.04.2019**
(21) Application number: 11872330.3
(22) Date of filing: 13.09.2011
(51) Int. Cl.: H04W 12/06

(54) **AUTHENTICATION MECHANISM**
AUTHENTIFIZIERUNGSMECHANISMUS
MÉCANISME D'AUTHENTIFICATION

(43) Date of publication of application: 23.07.2014
(73) Proprietor: Nokia Solutions and Networks Oy, 02610 Espoo (FI)
(72) Inventor: DING, Fu, Beijing 100094 (CN); SUN, Shaojun, Beijing 100055 (CN)
(74) Representative: Nokia EPO representatives
(86) International application number: PCT/CN2011/079574
(87) International publication number: WO 2013/037101

(56) References cited:
- WO-A1-2011/082150
- WO-A1-2011/087826
- CN-A- 102 136 976
- CN-A- 102 149 084
- "Machine- to- Machine communications (M2M); Functional architecture;draft_architecture_TS post M2M#8 rev marks", ETSI DRAFT; DRAFT_ARCHITECTURE_TS POST M2M#8 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, no. V0.2.1, 9 April 2010 (2010-04-09), pages 1-53, XP014165271, [retrieved on 2010-04-09]
- INTERDIGITAL ET AL: "Ticket #12: Gateway and Device Protection;M2M(10)0269 Ticket12 discussion doc", ETSI DRAFT; M2M(10)0269 TICKET12 DISCUSSION DOC, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, 8 September 2010 (2010-09-08), pages 1-29, XP014165448, [retrieved on 2010-09-08]

## Description

The present invention relates to authentication. In particular, the invention relates to authentication in machine-to-machine (M2M) applications.

### EUROPEAN TELECOMMUNICATIONS STANDARDS INSTITUTE (ETSI), Draft

ETSI TS 102 690, "Machine- to- Machine communications (M2M); Functional architecture . Version 0.2.1., XP014165271, comprises a description of the M2M communications, especially the functional entities of an M2M system and the relationships of the entities.

INTERDIGITAL ET AL: "Ticket #12: Gateway 1-17 and Device Protection; M2M(10)0269 Ticket12 discussion doc", ETSI DRAFT; M2M(10)0269 TICKET12 DISCUSSION DOC, EUROPEAN TELECOMMUNICATIONS STANDARDS INSTITUTE (ETSI), 650, ROUTE DES LUCIOLES ; F-06921 H04L SOPHIA-ANTIPOLIS ; FRANCE, vol. SmartM2M, 8 September 2010 (2010-09-08), pages 1-29, XP014165448, [retrieved on 2010-09-08] discloses description of gateway and device protection.*

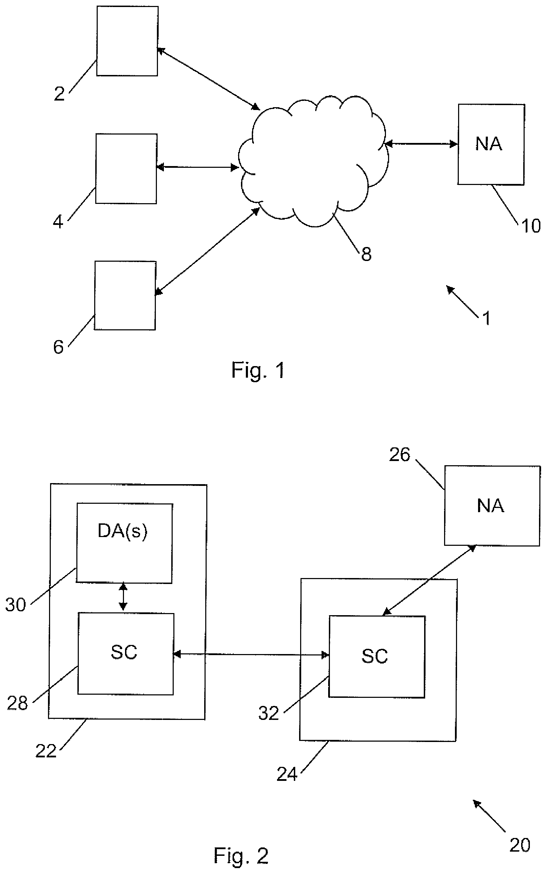

Figure 1 is a block diagram of a system, indicated generally by the reference numeral 1. The system 1 comprises a first M2M device 2, a second M2M device 4, a third M2M device 6, a network 8 and a network application 10.

Machine-to-machine (M2M) devices, such as the devices 2, 4 and 6 in the system 1, are used to provide data to other machines or applications, such as the network application 10. This data is transmitted over a network, such as the network 8. The network 8 may be a wireless network. For example, the network 8 may be provided by a mobile network provider.

M2M applications in which devices, such as sensors, provided data to applications, such as software programs, are becoming well established. M2M systems can build on existing mobile communication infrastructure to provide simple, efficient and reliable data reporting and recording systems.

By way of example, the system 1 may be a smart metering system. The devices 2, 4 and 6 may be sensors that obtain data relating to the amount of a metered resource (such as electricity) that is consumed at a particular site (such as a user's home). This data is transmitted via the network 8 to the application 10. The application 10 may be a billing system that bills the users of the metered resource accordingly.

Figure 2 shows a system, indicated generally by the reference numeral 20, comprising an M2M device 22, an M2M platform 24 and a network application 26. The M2M device 22 is logically split into two parts: a service capabilities (SC) part 28 and one or multiple device application (DA) parts 30.

The latter is built on the former, which means that the DA part 30 can only communicate with M2M platform 24 or the NA 26 via the SC part 28.

One exemplary use case of the system 20 is smart metering. In a smart meter (the M2M device 22), a SC layer 28 provides a communication channel and other core M2M services between the M2M device 22 and the M2M platform 24. In the DA layer 30, a metering application component is responsible for reporting metering data to the M2M platform 24 and a Smart Grid network application 26. Here, M2M platforms might typically be run by a communication service provider (CSP), and Smart Grid network application might typically be run by power grid enterprises.

Authentication is required before an M2M device (including its application part) is allowed to access an M2M platform. This enables an M2M platform (such as the platform 24) to reject requests from invalid M2M devices and accept requests from valid M2M devices and provide subscribed platform services based on attributes or configuration of those devices and applications running on them.

Most network applications are provided by service providers other than the M2M platform operator, so DAs (such as DA 30) may be provided by service providers, which is out of the M2M platform operator's control. In the exemplary system 20, both the SC part 28 and the DA part 30 of the M2M device 22 should be authenticated.

The system 20 includes a single M2M device 22 and a single network application 26. Many real systems will include multiple M2M devices and/or multiple network applications and can provide substantial flexibility.

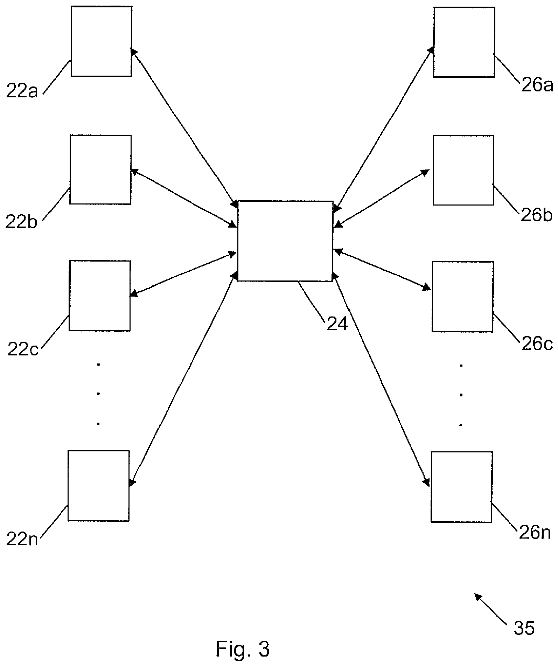

By way of example, Figure 3 shows a system, indicated generally by the reference numeral 35, comprising a plurality of M2M devices 22a, 22b, 22c...22n, an M2M platform 24 and a plurality of network applications 26a, 26b, 26c...26n. Each of the plurality of M2M devices and each of the network applications is in two-way communication with the M2M platform 24.

The M2M platform 24 is designed to have service capabilities such as collecting and caching data sent from the plurality of M2M devices. This data will be consumed by one or more of the network applications. It is possible that a malicious or mal-functioned DA running on a M2M device produces data but without having a network application to consume that data. Thus, resources, such as Central Processing Unit (CPU), network bandwidth and data cache, are wasted. Moreover, malicious M2M devices may attack the network, network application or M2M platform, which are not foreseen when the M2M platform is developed.

Different device applications provided by the various M2M devices in the system 35 may provide data to different network applications and may have different access rights or charging schemes (even if supplying data to the same network application). Accordingly, the M2M platform 24 needs to treat different device applications (DAs) differently.

The M2M platform 24 typically needs to trace or audit the behaviours of each device application (DA) to enable the provision of value-added services (like accounting, billing, etc). In order to do this, M2M platform needs to identify DAs, especially those sharing the same SC.

It is conventional in the art that DA authentication to a network application happens separately after SC authentication to the M2M platform. Due to the separation an SC is unaware of DA(s) on it or associated with it and can not therefore have control of the DA(s).

Accordingly, the present invention seeks to address at least in part some or all of the disadvantages and/or problems of the conventional systems described hereinabove.

According to a first aspect of the present invention there is provided a method of operating a machine-to-machine platform comprising the steps of: authenticating a service capability portion of a machine-to-machine device in order to enter a partially authenticated state; and receiving a notification from a network application wherein the notification informs the machine-to-machine platform of the authentication of a device application portion of the machine-to-machine device at the network application in order to enter a fully authenticated state and comprises one or more parameters relating to the device application to enable the machine-to-machine platform to apply control to the device application.

Therefore, the machine-to-machine platform authenticates the service capability portion of a machine-to-machine device but is also notified of the authentication of one or more device application portion(s) of the machine-to-machine device. Once the machine-to-machine platform is aware of the authentication of both portions the fully authenticated state is entered enabling the machine-to-machine platform to fulfil the service requests of the machine-to-machine device.

The method may further comprise the steps of receiving a service request from the device application; and requesting the notification for the device application from the network application.

The method may further comprise the step of providing services to the device application once the fully authenticated state has been entered.

According to a second aspect of the present invention there is provided a machine-to-machine platform comprising: a processor adapted to authenticate a service capability portion of a machine-to-machine device in order to enter a partially authenticated state; and a first input adapted to receive a notification from a network application wherein the notification informs the machine-to-machine platform of the authentication of a device application portion of the machine-to-machine device at the network application in order to enter a fully authenticated state and comprises one or more parameters relating to the device application, the machine-to-machine platform being configured to control the device application based on the parameters.

The machine-to-machine platform may further comprise a second input adapted to receive a service request from the device application; and a first output adapted to request the notification for the device application from the network application.

The machine-to-machine platform may further comprise a second output adapted to provide services to the device application once the fully authenticated state has been entered.

The first input and the second input may be the same input or different inputs. The first output and the second output may be the same outputs or different outputs.

The machine-to-machine platform may be adapted using hardware, software or any combination thereof.

According to a third aspect of the present invention there is provided a method of operating a network application comprising the steps of: authenticating a device application portion of a machine-to-machine device; determining one or more parameters relating to the device application portion and transmitting a notification to a machine-to-machine platform to inform the machine-to-machine platform of the authentication of the device application portion of the machine-to-machine device at the network application such that the machine-to-machine platform can enter a fully authenticated state the notification comprising the one or more parameters relating to the device application.

Accordingly, a network application authenticates a device application portion of a machine-to-machine device and informs the machine-to-machine platform of the authentication so that the machine-to-machine platform may enter a fully authenticated state enabling the machine-to-machine platform to provide services to the machine-to-machine device.

The method may further comprise the step of receiving a request from the machine-to-machine platform for the notification.

According to a fourth aspect of the present invention there is provided a device comprising: a first processor adapted to authenticate a device application portion of the machine-to-machine device; and determining one or more parameters relating to the device application portion and an output adapted to transmit a notification to a machine-to-machine platform to inform the machine-to-machine platform of the authentication of the device application portion of the machine-to-machine device at the network application such that the machine-to-machine platform can enter a fully authenticated state, the notification comprising the one or more parameters relating to the device application.

The device may further comprise an input adapted to receive a request from the machine-to-machine platform for the notification.

The device may further comprise a second processor adapted to determine one or more parameters relating to the device application portion; and a third processor adapted to include the one or more parameters in the notification.

The first processor, second processor and third processor may be the same processor, different processors or any combination thereof. The network application may be adapted by hardware, software or any combination thereof.

According to a fifth aspect of the present invention there is provided a computer program product comprising computer readable executable code which, when run on a computer, causes the computer to execute the methods of the first aspect and the third aspect of the present invention.

According to a sixth aspect of the present invention there is provided a machine-to-machine system comprising: a machine-to-machine platform according to the second aspect of the present invention; and the device according to the fifth aspect of the present invention.

Exemplary embodiments of the invention are described below, by way of example only, with reference to the following numbered drawings.
Figure 1 is a block diagram of a machine-to-machine system;
Figure 2 is a block diagram of a machine-to-machine system;
Figure 3 is a block diagram of a machine-to-machine system;
Figure 4 shows an algorithm in accordance with an aspect of the present invention; and
Figure 5 is a message flow diagram in accordance with an aspect of the present invention.

To address the problems mentioned above, this invention proposes a process to make the M2M platform (such as the platform 24) aware of device application identities (such as the DA 30) and then be able to impose control over them. This is achieved by adding a notification process between NA and M2M platform as described further below.

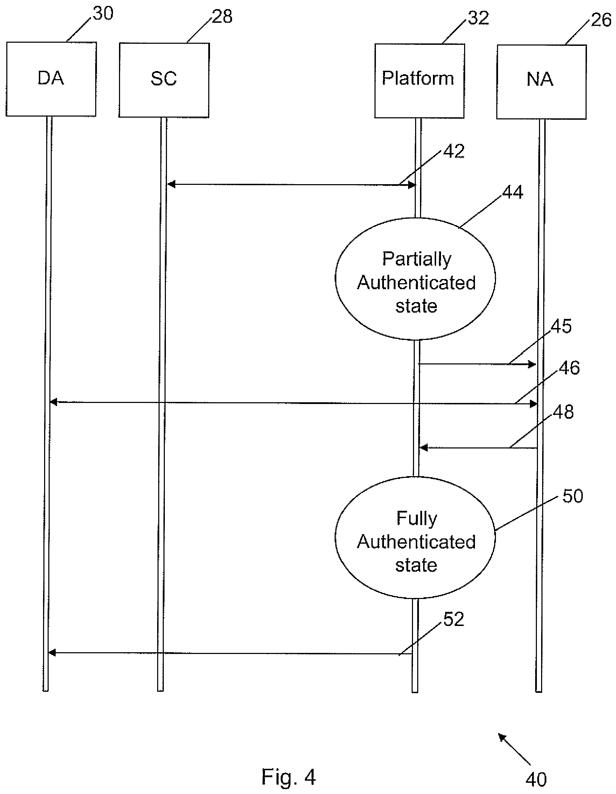

Figure 4 shows an algorithm, indicated generally by the reference numeral 40, in accordance with an aspect of the present invention.

The algorithm 40 starts at step 42, where a service capabilities part 28 of a M2M device is authenticated at an M2M platform 32. The authentication step 42 can be carried out in many different ways and is conventional in the art.

In response to the authentication of the SC part in step 42, the M2M device enters a "partially authenticated state" (step 44 of the algorithm 40). In the partially authenticated state, the device may have limited access to the network and platform services.

In many of the embodiments, the M2M platform may request (message 45) a notification of authentication of the one or more DAs 30 from the network application 26.

Next, whether or not the M2M platform requested a notification of the authentication of the DA(s) 30 at the network application 26, the device application 30 is authenticated at the network application 26 (step 46). As with the authentication step 42, the authentication step 46 is itself conventional. With the DA 30 authenticated, the network application 26 sends a notification message to the M2M platform 32 (the message 48). The notification message may include one or more parameters (where parameters includes attributes) to enable the M2M platform to apply control and/or control the DA 30.

At this stage, both the SC part 28 and the DA part(s) 30 of the M2M device are authenticated at the M2M platform. Accordingly, the M2M device enters a "fully authenticated state" (step 50) with the M2M platform. The M2M platform is then able to provide services to the DA 30 (message 52).

Thus, in the partially authenticated state, when the DA layer of the client wants to access services, the M2M platform will request it to be authenticated by an associated network application. After the DA is authenticated by NA and this has been notified to the M2M platform, the platform changes the M2M device to the fully authenticated state. The M2M platform can then provide services to this fully authenticated DA. Otherwise, future service requests from the DA will be rejected.

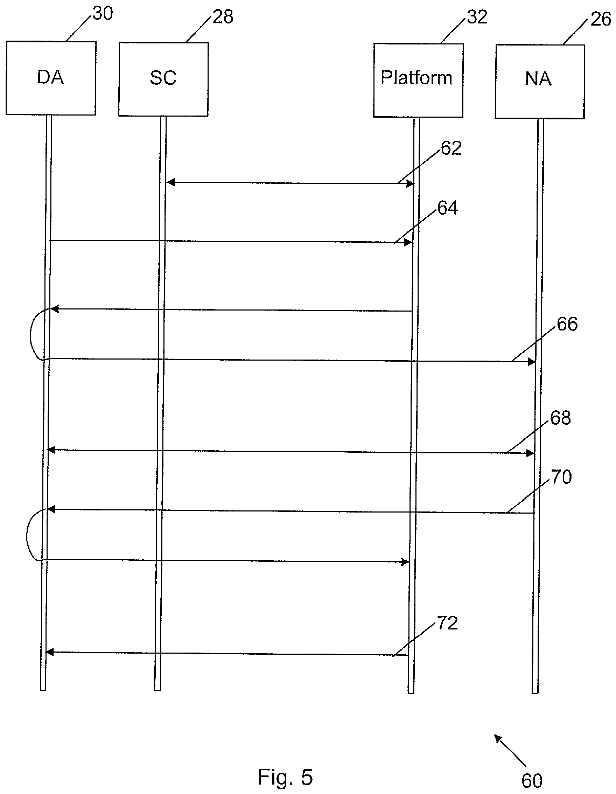

Figure 5 is a message sequence, indicated generally by the reference numeral 60, showing an exemplary implementation of the algorithm 40 using the well-known security assertion markup language (SAML).

The message sequence 60 starts at step 62 with the service capabilities (SC) part 28 of the M2M device authenticating at the M2M platform 32. Thus, the step 62 corresponds with the step 42 of the algorithm 40. Following the step 42, the M2M device enters the partially authenticated state discussed above.

Next, at step 64, the device application 30 makes a service request to the M2M platform 32. As the device application 30 has not yet been authenticated (i.e. is only partially authenticated by virtue of the authentication of the SC part 28) the M2M platform 32 responds to the request 64 by sending an authentication request message 66 to the device application 30, which message is forwarded directly to the network application 26. The message 66 may, for example, be a SAML authentication request.

In response to the authentication request 66, the network application authenticates the device application 30 (step 68 of the message sequence 60). The step 68 therefore corresponds with step 46 of the algorithm 40.

With the device application authenticated, the network application (NA) 26 sends a SAML assertion to the M2M platform via the device application (DA) 30 in a message 70. The SAML assertion contains the DA's attributes trusted in the NA domain. Using the message 70, the M2M platform is made aware that the DA has been authenticated. Thus, the message 70 implements step 48 of the algorithm 40.

On receipt of the message 70 at the M2M platform, the M2M device enters the fully authenticated state described above and can enjoy services from M2M platform (as indicated by the message 72 in the message sequence 70).

It should be noted that the present invention is not limited to specific authentication protocols. Hence, the invention may also be implemented with Extensible Authentication Protocol (EAP) or any other authentication protocols.

Advantages of the present invention include (but are not limited to) the following:
- M2M platform is aware of the authenticated identity of DA.
- Prevent malicious or mal-function application DA since requests from a DA that is not authenticated will be rejected.
- Differentiated services based on different DAs from different network applications are possible, even if they are running on the same M2M device or behind a M2M gateway.
- Enhanced security.
- Network applications may assert attributes of a DA instance and inform the M2M platform accordingly.
- Easy to incorporate network applications with little or no changes on them.
- Enable the platform to trace DAs running on a given M2M device, which extends the service capabilities of the M2M platform.
- Both the service capabilities portion of an M2M device and the device application portions of the M2M device are authenticated to the M2M platform enabling the M2M platform to have control over device applications accessing its services.

The embodiments of the invention described above are illustrative rather than restrictive. It will be apparent to those skilled in the art that the above devices and methods may incorporate a number of modifications without departing from the general scope of the invention. It is intended to include all such modifications within the scope of the invention insofar as they fall within the scope of the appended claims.

## Claims

1. A method of operating a machine-to-machine platform, comprising:
authenticating (42) a service capability portion of a machine-to-machine device in order to enter a partially authenticated state; **characterised by** the step of
receiving (48) a notification from a network application wherein the notification informs the machine-to-machine platform of the authentication of a device application portion of the machine-to-machine device at the network application in order to enter a fully authenticated state and comprises one or more parameters relating to the device application to enable the machine-to-machine platform to apply control to the device application.

2. The method as claimed in claim 1 further comprising the steps of:
receiving a service request from the device application; and
requesting the notification for the device application from the network application.

3. The method as claimed in any one of the preceding claims further comprising the step of:
providing (52) services to the device application once the fully authenticated state has been entered.

4. A machine-to-machine platform (32) comprising:
a processor adapted to authenticate a service capability portion (28) of a machine-to-machine device in order to enter a partially authenticated state; **characterised in that** the platform comprises:
a first input adapted to receive a notification from a network application (26) wherein the notification informs the machine-to-machine platform of the authentication of a device application portion (30) of the machine-to-machine device at the network application in order to enter a fully authenticated state and comprises one or more parameters relating to the device application,
the machine-to-machine platform being configured to control the device application based on the parameters.

5. The machine-to-machine platform as claimed in claim 4 further comprising:
a second input adapted to receive a service request from the device application; and
a first output adapted to request the notification for the device application from the network application.

6. The machine-to-machine platform as claimed in claim 4 or 5 further comprising:
a second output adapted to provide services to the device application once the fully authenticated state has been entered.

7. A method of operating a network application, comprising the steps of:
authenticating (46) a device application portion of a machine-to-machine device; **characterised by**
determining one or more parameters relating to the device application portion; and
transmitting (48) a notification to a machine-to-machine platform to inform the machine-to-machine platform of the authentication of the device application portion of the machine-to-machine device at the network application such that the machine-to-machine platform can enter a fully authenticated state, the notification comprising the one or more parameters relating to the device application.

8. The method as claimed in claim 7 further comprising the step of:
receiving (45) a request from the machine-to-machine platform for the notification.

9. A device comprising:
a first processor adapted to authenticate a device application portion (30) of a machine-to-machine device and determining one or more parameters relating to the device application portion; **characterised in that** the device comprises:
an output adapted to transmit a notification (48) to a machine-to-machine platform to inform the machine-to-machine platform of the authentication of the device application portion of the machine-to-machine device at the network application such that the machine-to-machine platform can enter a fully authenticated state, the notification comprising the one or more parameters relating to the device application.

10. The device as claimed in claim 9 further comprising:
an input adapted to receive a request from the machine-to-machine platform for the notification.

11. The device as claimed in claim 9 or 10 further comprising:
a second processor adapted to determine one or more parameters relating to the device application portion; and
a third processor adapted to include the one or more parameters in the notification.

12. A computer program product comprising computer readable executable code which, when run on a computer, causes the computer to execute the methods of claims 1 and 7.

13. A machine-to-machine system comprising:
the machine-to-machine platform of claim 4; and
the device of claim 9.

## Patentansprüche

1. Verfahren zum Betreiben einer Maschine-zu-Maschine-Plattform, umfassend:
Authentisieren (42) eines Dienstfähigkeitsteils einer Maschine-zu-Maschine-Vorrichtung, um in einen teilweise authentisierten Zustand einzutreten, **gekennzeichnet durch** den folgenden Schritt:
Empfangen (48) einer Benachrichtigung von einer Netzwerkanwendung, wobei die Benachrichtigung die Maschine-zu-Maschine-Plattform über die Authentisierung eines Vorrichtungsanwendungsteils der Maschine-zu-Maschine-Vorrichtung an der Netzwerkanwendung informiert, um in einen vollständig authentisierten Zustand einzutreten, und einen oder mehrere Parameter in Bezug auf die Vorrichtungsanwendung umfasst, um die Maschine-zu-Maschine-Plattform zum Anwenden von Steuerung auf die Vorrichtungsanwendung zu befähigen.

2. Verfahren nach Anspruch 1, ferner umfassend die folgenden Schritte:
Empfangen einer Dienstanforderung von der Vorrichtungsanwendung; und
Anfordern der Benachrichtigung für die Vorrichtungsanwendung von der Netzwerkanwendung.

3. Verfahren nach einem der vorhergehenden Ansprüche, ferner umfassend den folgenden Schritt:
Bereitstellen (52) von Diensten für die Vorrichtungsanwendung, sobald in den vollständig authentisierten Zustand eingetreten wurde.

4. Maschine-zu-Maschine-Plattform (32), umfassend:
einen Prozessor, der so ausgelegt ist, dass er einen Dienstfähigkeitsteil (28) einer Maschine-zu-Maschine-Vorrichtung authentisiert, um in einen teilweise authentisierten Zustand einzutreten;
**dadurch gekennzeichnet, dass** die Plattform umfasst:
einen ersten Eingang, der zum Empfangen einer Benachrichtigung von einer Netzwerkanwendung (26) ausgelegt ist, wobei die Benachrichtigung die Maschine-zu-Maschine-Plattform über die Authentisierung eines Vorrichtungsanwendungsteils (30) der Maschine-zu-Maschine-Vorrichtung an der Netzwerkanwendung informiert, um in einen vollständig authentisierten Zustand einzutreten, und einen oder mehrere Parameter in Bezug auf die Vorrichtungsanwendung umfasst,
wobei die Maschine-zu-Maschine-Plattform zum Steuern der Vorrichtungsanwendung basierend auf den Parametern konfiguriert ist.

5. Maschine-zu-Maschine-Plattform nach Anspruch 4, ferner umfassend:
einen zweiten Eingang, der zum Empfangen einer Dienstanforderung von der Vorrichtungsanwendung ausgelegt ist; und
einen ersten Ausgang, der zum Anfordern der Benachrichtigung für die Vorrichtungsanwendung von der Netzwerkanwendung ausgelegt ist.

6. Maschine-zu-Maschine-Plattform nach Anspruch 4 oder 5, ferner umfassend:
einen zweiten Ausgang, der zum Bereitstellen von Diensten für die Vorrichtungsanwendung ausgelegt ist, sobald in den vollständig authentisierten Zustand eingetreten wurde.

7. Verfahren zum Betreiben einer Netzwerkanwendung, umfassend die folgenden Schritte:
Authentisieren (46) eines Vorrichtungsanwendungsteils einer Maschine-zu-Maschine-Vorrichtung; **gekennzeichnet durch**
Bestimmen eines oder mehrerer Parameter in Bezug auf den Vorrichtungsanwendungsteil; und
Senden (48) einer Benachrichtigung an eine Maschine-zu-Maschine-Plattform, um die Maschine-zu-Maschine-Plattform über die Authentisierung des Vorrichtungsanwendungsteils der Maschine-zu-Maschine-Vorrichtung an der Netzwerkanwendung zu informieren, derart dass die Maschine-zu-Maschine-Plattform in einen vollständig authentisierten Zustand eintreten kann, wobei die Benachrichtigung den einen oder die mehreren Parameter in Bezug auf die Vorrichtungsanwendung umfasst.

8. Verfahren nach Anspruch 7, ferner umfassend den folgenden Schritt:
Empfangen (45) einer Anforderung von der Maschine-zu-Maschine-Plattform für die Benachrichtigung.

9. Vorrichtung, umfassend:
einen ersten Prozessor, der zum Authentisieren eines Vorrichtungsanwendungsteils (30) einer Maschine-zu-Maschine-Vorrichtung und Bestimmen eines oder mehrerer Parameter in Bezug auf den Vorrichtungsanwendungsteil ausgelegt ist; **dadurch gekennzeichnet**, das die Vorrichtung umfasst:
einen Ausgang, der zum Senden einer Benachrichtigung (48) an eine Maschine-zu-Maschine-Plattform ausgelegt ist, um die Maschine-zu-Maschine-Plattform über die Authentisierung des Vorrichtungsanwendungsteils der Maschine-zu-Maschine-Vorrichtung an der Netzwerkanwendung zu informieren, derart dass die Maschine-zu-Maschine-Plattform in einen vollständig authentisierten Zustand eintreten kann, wobei die Benachrichtigung den einen oder die mehreren Parameter in Bezug auf die Vorrichtungsanwendung umfasst.

10. Vorrichtung nach Anspruch 9, ferner umfassend:
einen Eingang, der zum Empfangen einer Anforderung von der Maschine-zu-Maschine-Plattform für die Benachrichtigung ausgelegt ist.

11. Vorrichtung nach Anspruch 9 oder 10, ferner umfassend:
einen zweiten Prozessor, der zum Bestimmen eines oder mehrerer Parameter in Bezug auf den Vorrichtungsanwendungsteil ausgelegt ist; und
einen dritten Prozessor, der zum Einfügen des einen oder der mehreren Parameter in die Benachrichtigung ausgelegt ist.

12. Computerprogrammprodukt, umfassend computerlesbaren, ausführbaren Code, der bei Ausführung auf einem Computer den Computer zum Durchführen der Verfahren nach Anspruch 1 und 7 veranlasst.

13. Maschine-zu-Maschine System, umfassend:
die Maschine-zu-Maschine-Plattform nach Anspruch 4; und
die Vorrichtung nach Anspruch 9.

## Revendications

1. Procédé d'exploitation d'une plate-forme de communication intermachines, comprenant :
l'authentification (42) d'une partie capacité de service d'un dispositif de communication intermachines pour réaliser l'entrée dans un état partiellement authentifié ; **caractérisé par** l'étape de
réception (48) d'une notification en provenance d'une application de réseau, la notification servant à informer la plate-forme de communication intermachines de l'authentification d'une partie application de dispositif du dispositif de communication intermachines au niveau de l'application de réseau afin de réaliser l'entrée dans un état entièrement authentifié, et contenant un ou plusieurs paramètres relatifs à l'application de dispositif pour permettre à la plate-forme de communication intermachines d'appliquer des commandes à l'application de dispositif.

2. Procédé selon la revendication 1, comprenant également les étapes suivantes :
réception d'une demande de service en provenance de l'application de dispositif ; et
demande de la notification concernant l'application de dispositif à l'application de réseau.

3. Procédé selon l'une quelconque des revendications précédentes, comprenant également l'étape suivante :
fourniture (52) de services à l'application de dispositif une fois que l'entrée dans l'état entièrement authentifié a été réalisée.

4. Plate-forme de communication intermachines (32), comprenant :
un processeur capable d'authentifier une partie capacité de service (28) d'un dispositif de communication intermachines afin de réaliser l'entrée dans un état partiellement authentifié ; la plate-forme étant **caractérisée en ce qu'**elle comprend :
une première entrée capable de recevoir une notification en provenance d'une application de réseau (26), la notification servant à informer la plate-forme de communication intermachines de l'authentification d'une partie application de dispositif (30) du dispositif de communication intermachines au niveau de l'application de réseau afin de réaliser l'entrée dans un état entièrement authentifié, et contenant un ou plusieurs paramètres relatifs à l'application de dispositif,
la plate-forme de communication intermachines étant configurée pour commander l'application de dispositif d'après ces paramètres.

5. Plate-forme de communication intermachines selon la revendication 4, comprenant également :
une deuxième entrée capable de recevoir une demande de service en provenance de l'application de dispositif ; et
une première sortie capable de demander la notification concernant l'application de dispositif à l'application de réseau.

6. Plate-forme de communication intermachines selon la revendication 4 ou 5, comprenant également :
une deuxième sortie capable de fournir des services à l'application de dispositif une fois que l'entrée dans l'état entièrement authentifié a été réalisée.

7. Procédé d'exploitation d'une application de réseau, comprenant les étapes suivantes :
authentification (46) d'une partie application de dispositif d'un dispositif de communication intermachines ; **caractérisé par**
la détermination d'un ou plusieurs paramètres relatifs à la partie application de dispositif ; et
envoi (48) d'une notification à une plate-forme de communication intermachines pour informer la plate-forme de communication intermachines de l'authentification de la partie application de dispositif du dispositif de communication intermachines au niveau de l'application de réseau afin que la plate-forme de communication intermachines puisse entrer dans un état entièrement authentifié, la notification contenant lesdits un ou plusieurs paramètres relatifs à l'application de dispositif.

8. Procédé selon la revendication 7, comprenant également l'étape suivante :
réception (45) d'une demande en provenance de la plate-forme de communication intermachines concernant la notification.

9. Dispositif comprenant :
un premier processeur capable d'authentifier une partie application de dispositif (30) d'un dispositif de communication intermachines et de déterminer un ou plusieurs paramètres relatifs à la partie application de dispositif ; le dispositif étant **caractérisé en ce qu'**il comprend :
une sortie capable d'envoyer une notification (48) à une plate-forme de communication intermachines pour informer la plate-forme de communication intermachines de l'authentification de la partie application de dispositif du dispositif de communication intermachines au niveau de l'application de réseau afin que la plate-forme de communication intermachines puisse entrer dans un état entièrement authentifié, la notification contenant lesdits un ou plusieurs paramètres relatifs à l'application de dispositif.

10. Dispositif selon la revendication 9, comprenant également :
une entrée capable de recevoir une demande en provenance de la plate-forme de communication intermachines concernant la notification.

11. Dispositif selon la revendication 9 ou 10, comprenant également :
un deuxième processeur capable de déterminer un ou plusieurs paramètres relatifs à la partie application de dispositif ; et
un troisième processeur capable d'intégrer lesdits un ou plusieurs paramètres dans la notification.

12. Produit de programme d'ordinateur contenant un code exécutable lisible par ordinateur qui, lorsqu'il est exécuté sur un ordinateur, amène l'ordinateur à mettre en oeuvre les procédés selon les revendications 1 à 7.

13. Système de communication intermachines comprenant :
la plate-forme de communication intermachines selon la revendication 4 ; et
le dispositif selon la revendication 9.
